# EUROPÄISCHE PATENTSCHRIFT

(11) **EP 1 299 177 B1**
(45) Veröffentlichungstag und Bekanntmachung des Hinweises auf die Patenterteilung: **08.11.2006**
(21) Anmeldenummer: 01960448.7
(22) Anmeldetag: 03.07.2001
(51) Int. Cl.: B01D 63/16, B01D 63/08, B01D 33/21

(54) **ROTATIONSFILTER**
ROTATING FILTER
FILTRE ROTATIF

(30) Priorität: 13.07.2000 DE 10034055; 17.01.2001 DE 10101846
(43) Veröffentlichungstag der Anmeldung: 09.04.2003
(73) Patentinhaber: Westfalia Separator AG, 59302 Oelde (DE)
(72) Erfinder: BLÄSE, Dieter, 73557 Mutlangen (DE); OLAPINSKI, Hans, 73773 Aichwald (DE); FEUERPEIL, Hans-Peter, 73529 Schwäbisch Gmünd (DE)
(74) Vertreter: Weitzel, Wolfgang
(86) Internationale Anmeldenummer: PCT/EP2001/007588
(87) Internationale Veröffentlichungsnummer: WO 2002/005935

(56) Entgegenhaltungen:
- WO-A-98/09720
- US-A- 1 264 635
- PATENT ABSTRACTS OF JAPAN vol. 1997, no. 03, 31. März 1997 (1997-03-31) -& JP 08 309160 A (HITACHI PLANT ENG &CONSTR CO LTD), 26. November 1996 (1996-11-26)
- PATENT ABSTRACTS OF JAPAN vol. 011, no. 030 (C-400), 29. Januar 1987 (1987-01-29) -& JP 61 200808 A (AGENCY OF IND SCIENCE & TECHNOL), 5. September 1986 (1986-09-05)
- PATENT ABSTRACTS OF JAPAN vol. 1995, no. 06, 31. Juli 1995 (1995-07-31) -& JP 07 075722 A (AGENCY OF IND SCIENCE & TECHNOL;OTHERS: 01), 20. März 1995 (1995-03-20)
- PATENT ABSTRACTS OF JAPAN vol. 012, no. 075 (C-480), 9. März 1988 (1988-03-09) -& JP 62 213811 A (NITTO ELECTRIC IND CO LTD;OTHERS: 01), 19. September 1987 (1987-09-19)

## Beschreibung

Die Erfindung betrifft eine Vorrichtung zum Filtrieren von Flüssigkeiten. Eine solche Vorrichtung ist beispielsweise in DE 100 19 672 A1 beschrieben.

Vorrichtungen dieser Art dienen zur Querstrom-Permeation von fließfähigen Medien. Sie umfassen wenigstens zwei Wellen, auf denen jeweils viele scheibenförmige Membrankörper parallel zueinander und in gegenseitigem Abstand angeordnet sind. Die Wellen sind hohl, und die Membranscheiben bestehen aus keramischem Material und sind von Radialkanälen durchzogen. Zwischen den Radialkanälen und dem Innenraum der Hohlwelle besteht eine leitende Verbindung. Die zu filtrierende Flüssigkeit gelangt von außen durch das poröse Material des Membrankörpers in die Kanäle, und von dort aus in die Hohlwelle.

Die genannten Wellen verlaufen parallel zueinander, so daß auch die Membranscheiben zweier einander benachbarter Scheibenpakete parallel zueinander angeordnet sind. Dabei sind die Wellen derart dicht nebeneinander angeordnet, daß die Scheiben zweier Scheibenpakete verzahnungsartig ineinandergreifen.

Die Scheiben müssen nicht den genannten Aufbau aus porösem keramischem Material haben. Es gibt auch Anwendungsfälle, bei welchen einige Scheiben als sogenannte Dummy-Scheiben aufgebaut sind. Auch ist es denkbar, die Scheiben aus Siebkörpem herzustellen. Auch Kombinationen der genannten Bauarten sind denkbar, beispielsweise die Paarung Siebkörper-Membrankörper. Im folgenden soll nur von "Scheiben" gesprochen werden.

Um eine möglichst große Mengenleistung zu erzielen, sollen möglichst viele Scheiben auf einer Welle sitzen. Die Scheiben müssen somit so dicht wie möglich angeordnet werden. Andererseits ist aber darauf zu achten, daß die Scheiben des einen Paketes nicht die Scheiben des anderen Paketes berühren. Deshalb ist eine genaue axiale Positionierung der Scheiben auf ihren Wellen erforderlich.

Zum Zwecke des Positionierens werden zwischen zwei einander benachbarten Scheiben Distanzelemente angeordnet. Ebenfalls im Sinne einer genauen axialen Positionierung wird das gesamte Scheibenpaket komprimiert, beispielsweise durch eine Mutter, die auf die betreffende Hohlwelle auf deren einem Ende aufgeschraubt wird, und die einen entsprechenden Druck auf die Vielzahl von Scheiben mit dazwischen befindlichen Distanzelementen ausübt. Zwischen Mutter und Hohlwelle kann ein Federpaket geschaltet werden.

Weiterhin muß dafür gesorgt werden, daß die Scheiben auch in radialer Richtung einwandfrei positioniert sind, und daß beim Umlauf der Welle mit den darauf befindlichen Scheiben der Rundlauf gewährleistet ist und ein radiales Ausschlagen vermieden wird. Weiterhin muß gewährleistet sein, daß das Drehmoment von der umlaufenden Hohlwelle gleichmäßig auf alle Scheiben der Hohlwelle übertragen wird.

Schließlich muß für eine einwandfreie Abdichtung zwischen den Scheiben und den Distanzelementen gesorgt werden, so daß keine Flüssigkeit zwischen den Scheiben und den Distanzelementen zur Hohlwelle hindurchtritt.

Alle diese Anforderungen sind bei den bisher bekannten Vorrichtungen nicht in wünschenswertem Maße erfüllt worden.

Eine Vorrichtung gemäß dem Oberbegriff des Anspruchs 1 ist aus JP-A-08309160, JP-A-612008 08 und JP-A-07075722 bekannt.

Der Erfindung liegt die Aufgabe zugrunde, eine Vorrichtung der eingangs beschriebenen Art derart zu gestalten, daß sich eine einwandfreie axiale und radiale Positionierung der Scheiben ergibt, daß die Dichtheit gegen Durchtritt von Flüssigkeit zwischen den Scheiben und den Distanzelementen gewährleistet ist, daß das Drehmoment gleichmäßig auf alle Scheiben übertragen wird, und daß sich die gesamte Vorrichtung mit allen ihren vielen Einzelteilen leicht und zuverlässig montieren läßt.

Diese Aufgabe wird durch die Merkmale von Anspruch 1 gelöst.

Der Kerngedanke der Erfindung besteht in der Gestaltung des Distanzelementes. Dieses umfaßt einen Tragring sowie zwei Dichtringe.

Der Tragring ist derart bemessen, daß er gegenüber der Hohlwelle Übermaß hat. Zwischen der Mantelfläche der Hohlwelle und der Innenfläche des Tragringes besteht somit ein ringförmiger Spaltraum. Dieser Spaltraum erstreckt sich über die gesamte Länge der Hohlwelle. Er kann reichlich bemessen werden, so daß eine freie Strömung möglich ist und Ablagerungen vermieden werden. Dies ist beispielsweise für Anwendungen in der pharmazeutischen Industrie von großer Bedeutung.

Zum Zwecke des Positionierens weist der Tragring Vorsprünge auf, die sich an der Mantelfläche der Hohlwelle abstützen. Dabei können die Vorsprünge - in einem achssenkrechten Schnitt gesehen - gegen die Mantelfläche hin spitz zulaufen, so daß zwischen Vorsprung und Mantelfläche der Hohlwelle nur ein Linienkontakt herrscht.

Außerdem wird eine Einrichtung vorgesehen, um eine drehfeste Verbindung zwischen Hohlwelle und Tragring herzustellen. Aufgrund der strammen Einspannung zwischen den Tragringen, den Dichtungselementen und den Scheiben werden die Scheiben von den Distanzelementen durch Reibung mitgenommen.

Einer der genannten Vorsprünge kann in eine entsprechende achsparallele Aussparung der Hohlwelle eingreifen, womit eine drehfeste Verbindung geschaffen wird.

Die genannten Dichtringe werden auf den beiden Stirnseiten eines jeden Tragringes angeordnet. Sie stellen die gewünschte Dichtverbindung sowie die notwendige Drehmomentübertragung zwischen Tragring und Scheibe her.

Die Erfindung ist anhand der Zeichnung näher erläutert. Darin ist im einzelnen folgendes dargestellt:
- Figur 1: zeigt eine Vorrichtung mit Filterplatten gemäß der Erfindung in einer schematischen Aufrißansicht.
- Figur 2: zeigt den Gegenstand von Figur 1 in einer Draufsicht.
- Figur 3: zeigt eine abgewandelte Ausführungsform des Gegenstandes von Figur 1, wiederum in Draufsicht.
- Figur 4: zeigt einen Ausschnitt aus dem Gegenstand von Figur 1.
- Figur 5: zeigt in vergrößerter Darstellung eine Ringhälfte des in Figur 4 gezeigten Distanzelementes.
- Figur 6: zeigt einen Schnitt durch den Gegenstand von Figur 4, gelegt im Bereich des Distanzelementes, und zwar schematisch in vergrößerter Darstellung.
- Figur 7: veranschaulicht parallel nebeneinander aufgetragen einerseits die Länge der Hohlwelle, andererseits die aufaddierten Längen der Scheiben, der Tragringe sowie der Dichtringe.
- Figur 8: zeigt in einer schematischen Darstellung eine Vorrichtung gemäß der Erfindung; hieraus sind die Einzelheiten der fliegenden Lagerung erkennbar.
- Figur 9: zeigt einen Ausschnitt aus dem Gegenstand von Figur 8 im Bereich des freien Endes einer Welle.
- Figur 10: zeigt eine Ausführungsform der Erfindung mit Zwillingsanordnung zweier erfindungsgemäßer Vorrichtungen.
- Figur 11: zeigt eine Ausführungsform der Erfindung wiederum mit Zwillingsanordnung zweier Vorrichtungen, jedoch mit einer dazwischen befindlichen Trennwand.
- Figur 12: zeigt den Gegenstand von Figur 11 in einer vertikalen Position.
- Figur 13: zeigt in schematischer Darstellung eine Ausführungsform mit einem Behälter mit konischem Mantel.
- Figur 14: zeigt eine Ausführungsform in Zwillingsanordnung zweier Vorrichtungen mit Wellen, die jeweils im mittleren Bereich ihrer Länge gelagert sind.
- Figur 15: zeigt in schematischer Darstellung eine Mehrzahl von Scheibenpaketen mit gegeneinander geneigten Wellen.
- Figur 16: zeigt in einem achssenkrechten Schnitt eine erfindungsgemäße Vorrichtung besonderer Ausgestaltung.

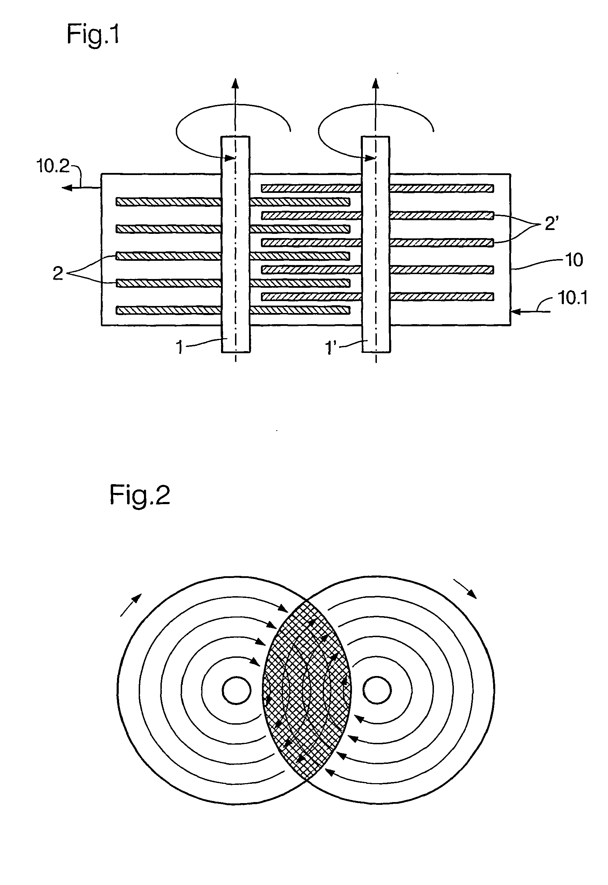

Wie aus den Figuren 1 und 2 erkennbar, weist die Vorrichtung zwei Hohlwellen 1, 1' auf. Jede Hohlwelle trägt ein Paket von Scheiben 2, 2'. Die beiden Wellen 1, 1' und die Scheibenpakete befinden sich in einem Behälter 10. Der Behälter weist einen Einlaß 10.1 und einen Auslaß 10.2 auf.

Die beiden Hohlwellen 1, 1' sind angetrieben - siehe Figur 2, und zwar in Draufsicht auf die Enden der Wellen gesehen im Uhrzeigersinn. Sie können auch beide im Gegenzeigersinn laufen. Jedenfalls ist der Umlauf in ein- und demselben Drehsinn vorteilhaft.

Die Scheiben dienen im vorliegenden Falle der Filtration. Sie sind aus einem porösen keramischen Material aufgebaut und weisen in ihrem Inneren Kanäle auf. Die Kanäle stehen mit den Innenräumen der Hohlwellen 1, 1' in leitender Verbindung.

Durch den Einlaß 10.1 gelangt das zu behandelnde Medium in den Innenraum des Behälters 10. Das Filtrat/Permeat tritt sodann durch die Poren des keramischen Materiales in die genannten Kanäle und gelangt von dort aus in den Innenraum der beiden Hohlwellen 1, 1'. Es tritt sodann an den oberen Enden der Hohlwellen aus - siehe die beiden nach oben weisenden Pfeile.

Was nicht durch die Poren des Keramikmateriales hindurchzudringen vermag, gelangt als Retentat zum Auslaß 10.2 des Behälters 10.

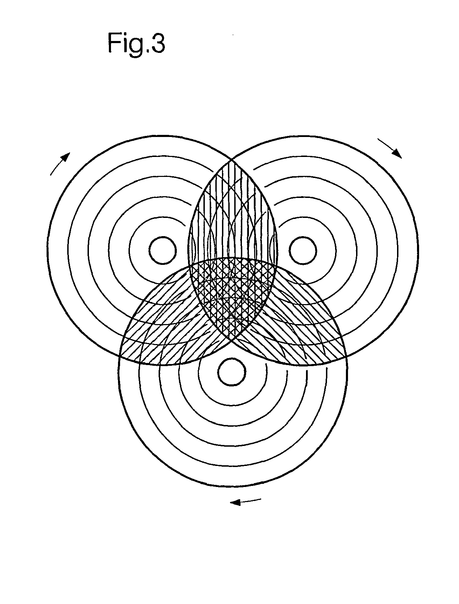

Bei der in Figur 3 gezeigten Ausführungsform sind drei Wellen mit drei Scheibenpaketen dargestellt. Auch hier laufen die Scheiben im selben Drehsinn um. Es könnte aber auch ein gegenläufiger Drehsinn gewählt werden.

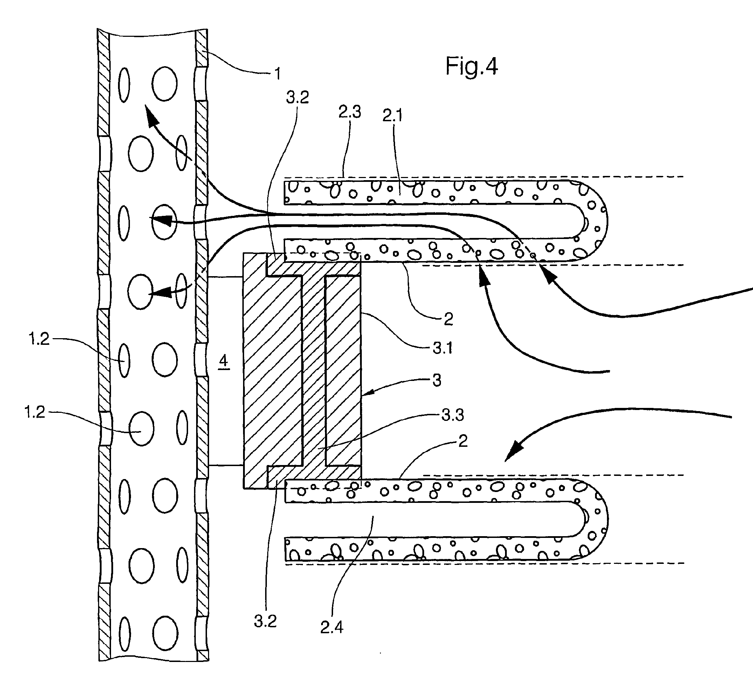

Figur 4 zeigt wesentliche Einzelheiten der Erfindung. Man erkennt wiederum eine Hohlwelle 1, ferner - im Querschnitt - zwei Membranscheiben 2, die gleich aufgebaut sind. Die Membranscheiben umfassen jeweils einen Stützkörper 2.1 aus porösem, keramischem Material. Sie umfassen ferner eine Membranbeschichtung 2.3, die vom Stützkörper getragen ist und sich an dessen Außenfläche befindet.

Entscheidend ist das Distanzelement 3. Dieses ist ringförmig. Es umschließt die Hohlwelle 1.

Das Distanzelement 3 ist aus einem Tragring 3.1 sowie aus zwei Dichtringen 3.2, 3.2 aufgebaut.

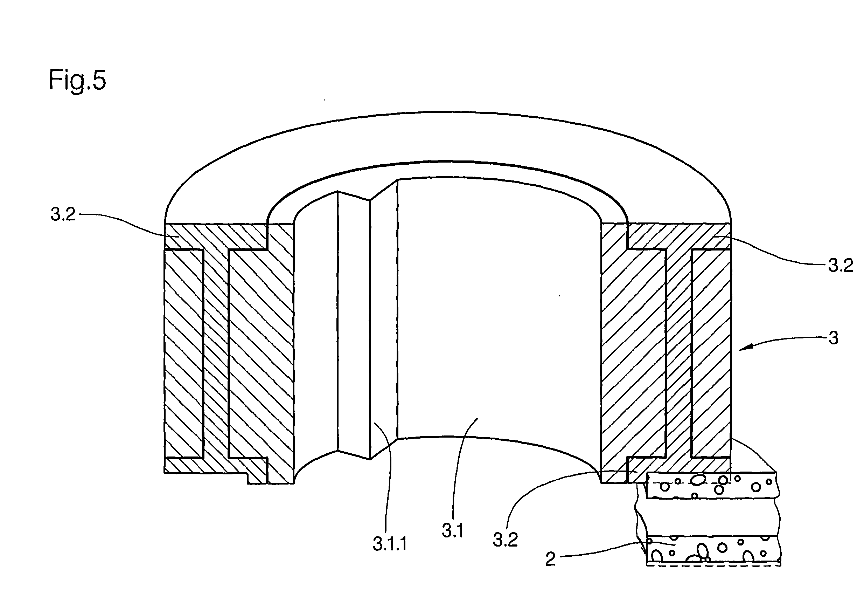

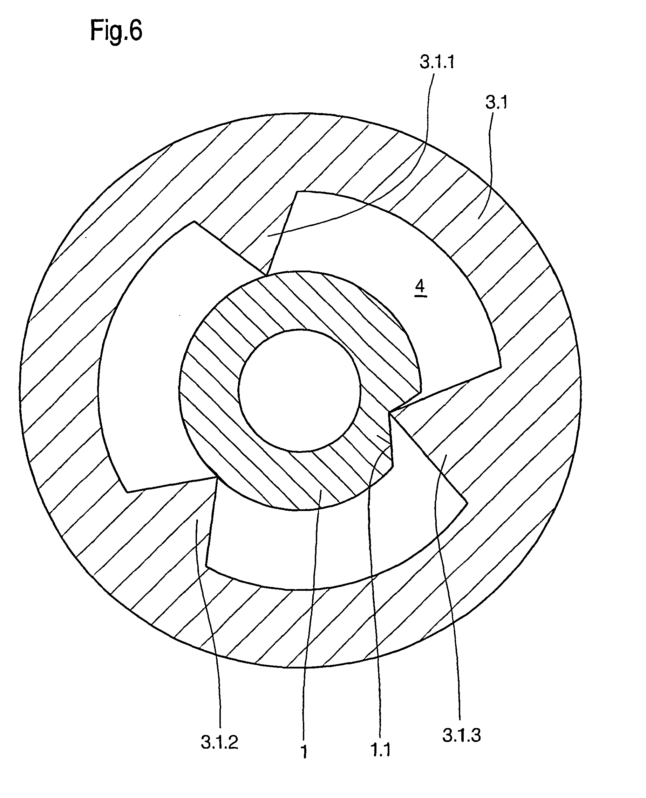

Die Gestalt des Distanzelementes 3 läßt sich genauer aus den Figuren 5 und 6 erkennen.

Der Tragring 3.1 weist gegenüber der Hohlwelle 1 Übermaß auf. Seine innere Umfangsfläche liegt auf einem größeren Radius, als die Mantelfläche der Hohlwelle 1. Aus diesem Grunde ist zwischen diesen beiden Flächen ein ringförmiger Zwischenraum 4 gebildet - siehe Figur 4.

Tragring 3.1 weist eine Besonderheit auf. Wie man aus den Figuren 4, 5 und 6 erkennt, ist er mit Vorsprüngen versehen. Dabei sind die Vorsprünge 3.1.1 und 3.1.2 gleich gestaltet, während Vorsprung 3.1.3 hiervon abweicht. Alle drei Vorsprünge sind in der Schnittansicht gemäß Figur 6 keilförmig oder dreieckig. Sie weisen eine Spitze auf, die gegen die Hohlwelle 1 gerichtet ist. Jedoch stützen sich die Spitzen der Vorsprünge 3.1.1 und 3.1.2 auf der Mantelfläche der Hohlwelle 1 ab, während der Vorsprung 3.1.3 in eine Nut 1.1 der Hohlwelle 1 eingreift. Vorsprung 3.1.3 und Nut 1.1 bilden gemeinsam eine Einrichtung zum Herstellen einer drehfesten Verbindung zwischen Hohlwelle 1 einerseits und Tragring 3.1 andererseits, damit zugleich zwischen Hohlwelle 1 und dem Paket der Scheiben 2.

Man erkennt aus Figur 6 wiederum den ringförmigen Zwischenraum 4 zwischen dem Tragring 3.1 und der Hohlwelle 1. Dabei ist dieser Ringraum 4 in Umfangsrichtung lediglich durch die Vorsprünge 3.1.1, 3.1.2 und 3.1.3 unterbrochen, erstreckt sich aber über die gesamte Länge der Hohlwelle 1.

Wie man aus Figur 4 erkennt, weist jede Scheibe 2 in ihrem Inneren einen Kanal 2.4 auf - hier übertrieben groß dargestellt. Kanal 2.4 einer jeden Scheibe 2 steht mit dem ringförmigen Zwischenraum 4 und dem Innenraum der Hohlwelle 1 in leitender Verbindung, und zwar über Bohrungen 1.2, die sich über die gesamte Länge der Hohlwelle 1 erstrecken. Der Zwischenraum 4 kann großzügig bemessen sein, so daß eine freie Strömung des Mediums und damit eine gute Durchspülung möglich ist, ohne die Gefahr von Ablagerungen durch tote Ecken.

Hilfreich kann auch die in Figur 6 dargestellte Bemessung von Vorsprung 3.1.3 und Nut 1.1 sein. Die Nut 1.1 hat nämlich einen größeren Öffnungswinkel, als der Winkel des Vorsprunges 3.1.3 an seiner Spitze ist. Somit findet auch im Bereich der Spitze des Vorsprungs 3.1.3 eine gewisse Durchströmung statt.

Die Vorsprünge 3.1.1, 3.1.2 und 3.1.3 stellen eine Zentrierung des Tragringes 3.1 auf der Hohlwelle 1 dar und positionieren damit zugleich die Scheiben 2 des gesamten Scheibenpaketes, was sich aus dem folgenden ergibt.

Das Distanzelement trägt die beiden genannten Dichtringe 3.2 auf seinen beiden Stirnseiten. Im vorliegenden Falle sind diese beiden Dichtringe durch einen Steg 3.3 miteinander verbunden. Die Dichtringe 3.2 und der Steg 3.3 sind einteilig. Der Steg hat dabei keine funktionale Bedeutung, sondern ist aus Fertigungsgründen zweckmäßig. Er könnte auch radial weiter außen liegen, derart, daß die beiden Dichtringe 3.2, 3.2 zusammen mit dem Steg 3.3 in der Darstellung gemäß Figur 4 ein U-förmiges Profil aufweisen.

Die perspektivische Darstellung des Distanzelementes 3 gemäß Figur 5 läßt folgendes erkennen:
In der Figur links erkennt man den Dichtring 3.2 in einem Zustand, in dem er zwar auf den Tragring 3.1 aufvulkanisiert ist, jedoch ohne Bearbeitung.
In der rechten Darstellung sind die beiden Dichtringe 3.2, 3.2 bearbeitet, und zwar ist hierbei ein Sitz herausgearbeitet, der in dieser Darstellung rechteckig ist. Dieser Sitz dient zur Aufnahme der betreffenden Scheibe 2. Der exakte Sitz kann auch direkt während der Vulkanisation realisiert werden. Die Sitzfläche kann profiliert sein, beispielsweise in Wellen- oder Sägezahnform.

Das gesamte Scheibenpaket samt der Vielzahl von dazwischen befindlichen Distanzelementen 3 wird bei der Montage gleichmäßig in axialer Richtung verspannt. Es wird ein axialer Druck ausgeübt, so daß ein Zusammenpressen der genannten Elemente erfolgt. Dies kann bespielsweise durch Aufschrauben einer Mutter auf das eine Ende der Hohlwelle 1 erzielt werden; hierbei übt die Mutter bei ihrem Anziehen einen Axialdruck auf das dort befindliche Distanzelement 3 aus. Der Anpreßdruck überträgt sich gleichmäßig und ohne Reibungsverluste auf alle anderen Scheiben 2 und Distanzelemente 3.

Die besondere, erfindungsgemäße Gestaltung des Tragelementes 3 führt dazu, daß die Distanzelemente 3 bei dem genannten Verspannen in axialer Richtung praktisch reibungsfrei auf der Mantelfläche der Hohlwelle 1 gleiten können. Hierdurch wird ein Druckabfall der Spannkraft über die Länge der Hohlwelle 1 vermieden.

Die Spannkraft ist notwendig, um das von der Welle 1 auf den Tragring 3.1 übertragene Drehmoment auch auf die Scheiben 2 zu übertragen. Durch die genannte Einspannung wird nämlich eine kraftschlüssige Verbindung zwischen den Scheiben 2 und den Dichtringen 3.2 hergestellt, so daß beim Verdrehen der Hohlwelle 1 eine Mitnahme aller Scheiben erfolgt.

### Ganz wichtig ist der folgende Vorteil, der sich aus der Erfindung ergibt:

Das axiale Spannen der Scheiben 2 und der Distanzelemente 3 führt zu einer genauen Positionierung der Scheiben 2 in axialer Richtung. Dies ist wichtig, daß bei einer Anordnung gemäß der Figuren 1 bis 3 ein gegenseitiges Anlaufen (Berühren) der Scheiben des einen Paketes mit den Scheiben eines benachbarten Paketes vermieden wird. Würde, bedingt durch Reibung zwischen Dichtung und Hohlwelle, ein Druckabfall über die Länge der Hohlwelle 1 auftreten, so wären Scheiben und Distanzelemente im oberen Bereich, das heißt dort, wo die axiale Spannkraft eingeleitet wird, in höherem Maße druckbeaufschlagt, als Scheiben und Distanzelemente im entfernten Bereich. Hierdurch käme es zu axialen Maßabweichungen, die sich aufaddieren.

Das Material der Tragringe 3.1 sollte ein verhältnismäßig harter, weitgehend inkompressibler Werkstoff sein, beispielsweise Edelstahl, in besonderen Fällen Titan, Keramik, Kohlenstoff, Kunststoff, z.B. verstärkt.

Als Material der Dichtringe kommen plastisch bzw. elastisch verformbare Werkstoffe in Betracht, wie z.B. Elastomere, leicht verformbare Metalle bzw. deren Legierungen sowie Graphit.

Ein wichtiger Punkt ist das Problem der Ausdehnung der gesamten Einheit bei Erwärmung. Die Hohlwelle 1 wird im allgemeinen aus Edelstahl bestehen. Deren Wärmedehnung läßt sich leicht ermitteln.

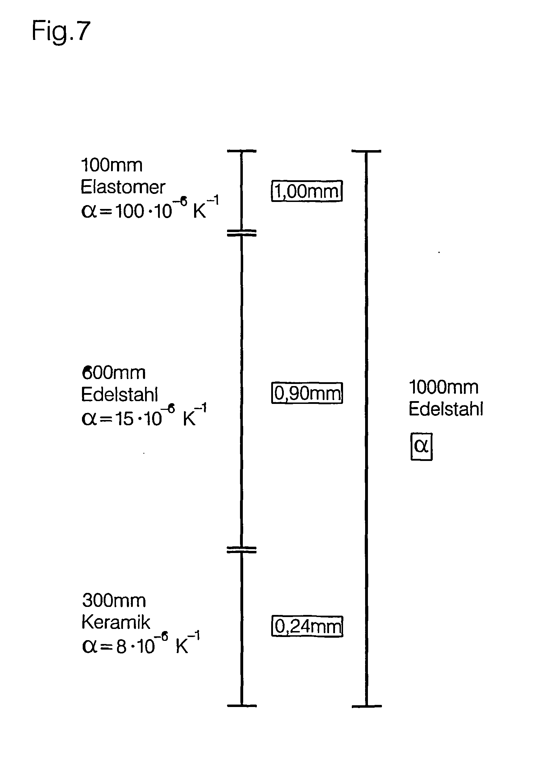

Mit der Wärmedehnung der Hohlwelle ist die Wärmedehnung der diese umgebenden Elemente zu vergleichen, nämlich den aus Keramik oder ähnlichem bestehenden Scheiben 2, der Tragelemente 3.1 und der Dichtringe 3.2. Wünschenswert oder notwendig ist hierbei, daß diese beiden Elemente - Hohlwelle einerseits und Scheiben, Tragelemente, Dichtringe andererseits - das gleiche thermische Ausdehnungsverhalten zeigen. Dies ist normalerweise nicht der Fall. Deswegen wird gemäß einem weiteren Gedanken der Erfindung empfohlen, bezüglich der Materialien der drei zuletzt genannten Elemente - Scheiben, Tragringe, Dichtringe - Materialien zu wählen, die - im Verbund - zu dem gewünschten Ergebnis führen. Siehe in diesem Zusammenhang Figur 7.

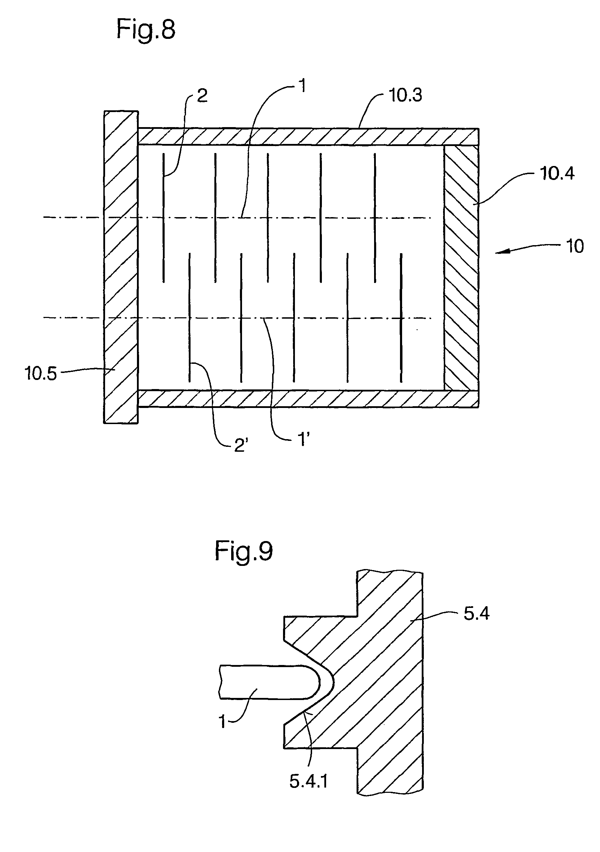

Figur 8 läßt das Wesen der Erfindung gut erkennen. Man sieht ein erstes Paket scheibenförmiger Körper 2, die auf einer Welle 1 sitzen, ferner ein zweites Paket scheibenförmiger Körper 2', die auf einer Welle 1' sitzen. Die Scheiben 2, 2' sind im vorliegenden Falle Kreisscheiben. Sie könnten auch eine andere Gestalt haben.

Diese beiden Baugruppen, jeweils Welle und Scheiben umfassend, befinden sich in einem Behälter 10. Dieser weist einen rohrförmigen, zylindrischen Mantel 10.3, einen Boden 10.4 sowie einen Deckel 10.5 auf. Der Behälter muß kein Kreiszylinder sein. Er kann zum Beispiel den Querschitt eines Polygons haben. Der Behälter muß nicht einmal zylindrisch sein. Er kann beispielsweise kegelstumpfförmig sein,

Die Wellen 1, 1' sind durch den Deckel 10.5 hindurchgeführt. Sie sind im Deckel gelagert und abgedichtet. Die Lagerung und die Abdichtung sind hier im einzelnen nicht dargestellt.

Auf der Außenseite des Deckels 10.5 befinden sich, ebenfalls nicht dargestellt, Antriebe für die beiden Wellen 1, 1'.

Wichtig ist, daß die beiden Wellen 1, 1' fliegend gelagert sind. Sie kragen somit vom Deckel 10.5 frei aus, ohne daß es einer Unterstützung der beiden Wellen 1, 1' an deren anderen Enden bedarf. Im vorliegenden Falle herrscht somit ein Abstand zwischen den freien Enden der Wellen 1, 1' und dem Boden 10.4.

Figur 9 zeigt eine Abwandlung des Gegenstandes von Figur 8. Man sieht das rechte Ende der Welle 1. Im Boden 5.4 ist eine Aussparung 5.4.1 vorgesehen. Diese zentriert das freie Ende der Welle 1 und nimmt dieses auf.

Eine solche Aufnahme 10.4.1 kann zweckmäßig sein. Sie ist jedoch nicht unbedingt notwendig. In jedem Falle bedarf es am freien Ende der beiden Wellen 1, 1' keiner Abdichtung. Jedenfalls ist das freie Wellenende im Betrieb von Medium umspült.

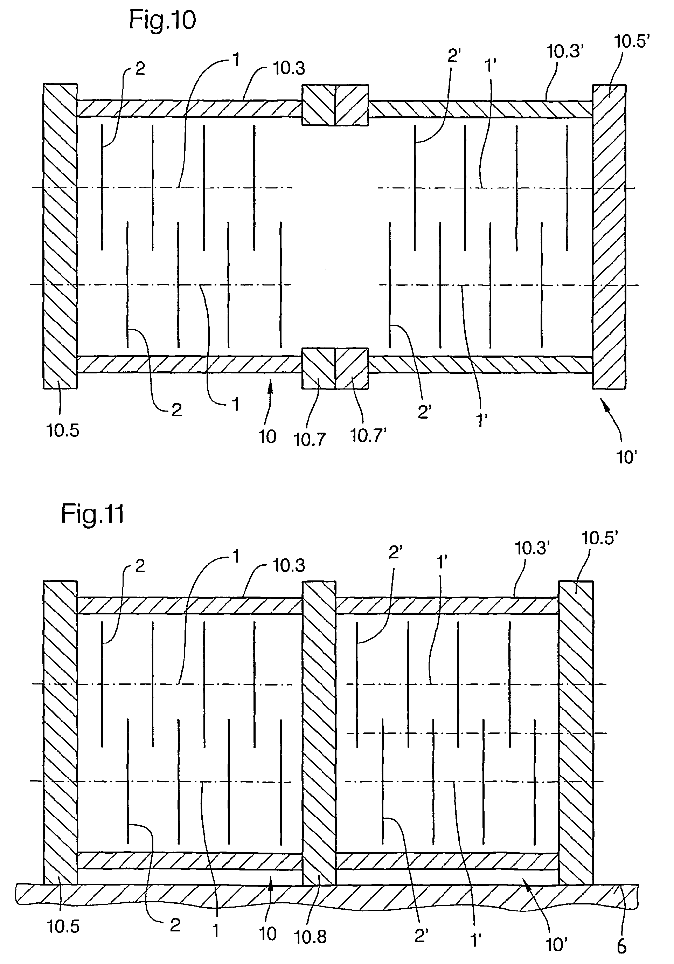

Besonders interessante Ausführungsformen sind in den Figuren 10 und 11 dargestellt. Dabei sind zwei erfindungsgemäße Vorrichtungen miteinander vereinigt Alle Wellen verlaufen parallel zueinander. Die beiden Behälter 10, 10' sind zusammengefügt. Sie weisen jeweils einen Deckel 10.5, 10.5' sowie einen zylindrischen, rohrförmigen Mantel 10.3, 10.3' auf. Die Mäntel 10.3, 10.3' tragen jeweils einen Ringflansch 10.7, 10.7'. An diesen Ringflanschen sind die beiden Behälter miteinander vereinigt, beispielsweise durch gegenseitiges Verschrauben. Auf diese Weise umschließen die beiden Behälter 10, 10' einen einzigen Raum ohne Unterteilung. Die Mäntel 10.3, 10.3' können auch ein einziges Bauteil sein, somit zum Beispiel aus einem durchgehenden Behältermantel bestehen.

Bei der Ausführungsform gemäß Figur 11 handelt es sich wiederum um eine Zwillings-Version, die zwei Behälter umfaßt. Der Aufbau ist im Grunde der selbe, wie bei der Ausführungsform gemäß Figur 10. Ein Unterschied besteht jedoch darin, daß hier statt der beiden Flansche 10.7, 10.7' eine Trennwand 10.8 vorgesehen ist. Auf diese Weise werden zwei getrennte Unfiltrat-Räume geschaffen.

Die gesamte Vorrichtung gemäß Figur 11 ist auf einer Rollbahn oder Gleitbahn 6 gelagert. Zur Demontage lassen sich die beiden Deckel 10.5, 10.5' in axialer Richtung verfahren, zusammen mit den Wellen und den darauf befindlichen Scheiben, und zwar entweder mit oder ohne dem Behältermantel. Auf diese Weise ist ein leichtes Montieren und Demontieren möglich.

Die Zwillingsausführung gemäß der Figuren 10 und 11 hat zahlreiche Vorteile. Sie ist zunächst einfacher im Aufbau, als zwei Einzelvorrichtungen. Es entfällt in beiden Fällen der Boden, der bei der Ausführungsform gemäß Figur 8 vorhanden sein muß - siehe dort Boden 10.4. Im Falle der Ausführungsform gemäß Figur 10 entfällt der Boden praktisch ersatzlos - sieht man von den Ringflanschen 10.7, 10.7' ab. Auf die Ringflansche 10.7, 10.7' kann aber auch verzichtet werden, zum Beispiel dann, wenn ein einziger durchgehender Behältermantel vorgesehen wird. Im Falle der Ausführungsform gemäß Figur 11 sind die beiden sonst notwendigen Böden durch die hier vorliegende Trennwand 10.8 ersetzt.

Bei der Ausführungsform gemäß Figur 11 kann die Trennwand 10.8 Durchlässe aufweisen. Diese sind hier nicht dargestellt. Solche Durchlässe können gewöhnliche Bohrungen sein. Es können aber auch Öffnungen mit einstellbarem oder regelbarem Öffnungsquerschnitt sein. Hieraus ergeben sich interessante Möglichkeiten für das Betreiben der gesamten Vorrichtung.

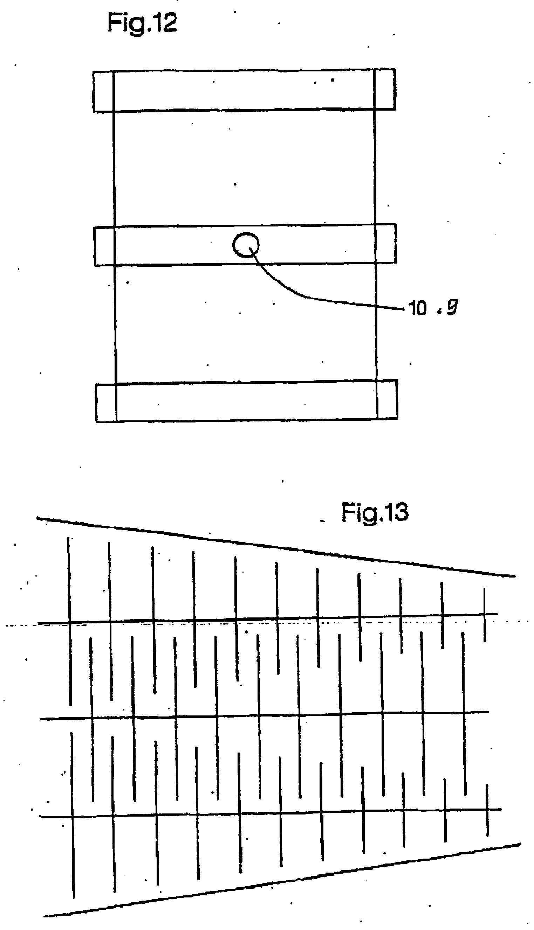

Figur 12 zeigt wiederum eine Gesamtvorrichtung analog jener gemäß Figur 11, vereinigt aus zwei Einzelvorrichtungen. Die Gesamtvorrichtung ist um eine horizontale Schwenkachse 10.9 verschwenkbar, so daß die Gesamtvorrichtung aus der hier dargestellten vertikalen Position in eine horizontale Position verschwenkt werden kann. Dies kann zum Zwecke des Montierens und Demontierens sehr praktisch sein, etwa bei Wartungsarbeiten.

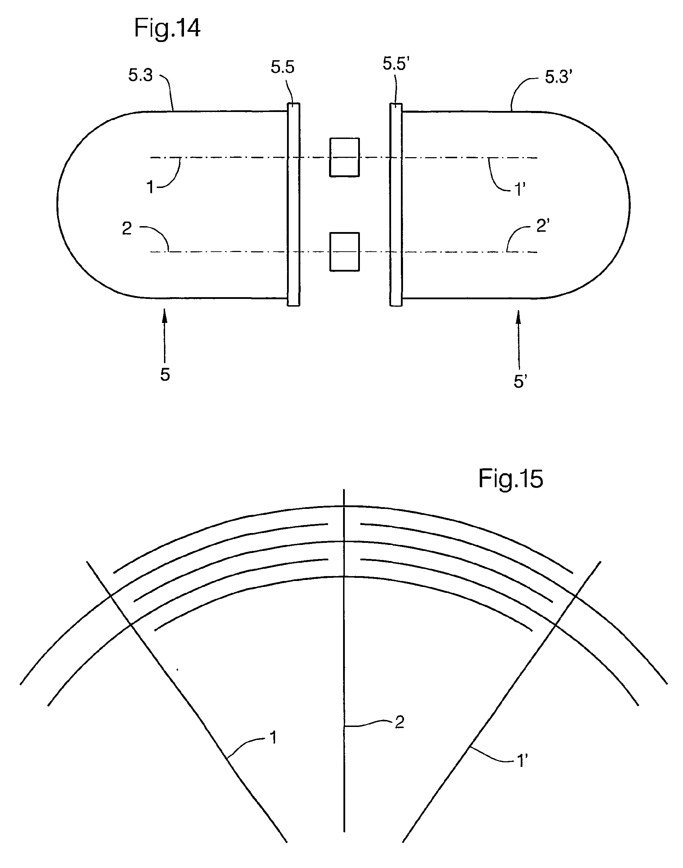

Figur 14 zeigt wiederum eine Ausführungsform der Vorrichtung in Zwillingsanordnung mit zwei Einzelvorrichtungen analog zu den Ausführungsformen gemäß der Figuren 10 und 11. Auch hierbei sind zwei Behälter 5,5 vorgesehen. Diese weisen Deckel 5,5, 5,5' sowie Mäntel 5,3, 5, auf.

Im Gegensatz zu den Ausführungsförmen gemäß der Figuren 10 und 11 sind jedoch die Deckel 5,5, 5,5' einander zugewandt. Ferner sind die Wellen 1, 1' 2, 2' in den Deckeln gelagert und weisen mit ihren freien Enden nach außen, im Gegensatz zu den Ausführungsformen gemäß der Figuren 10 und 11, bei welchen die freien Enden der Wellen gegeneinander gerichtet sind.

Zwischen den beiden Einzelvorrichtungen befindet sich der Antrieb der Wellen.

Figur 15 zeigt in schematischer Darstellung eine Konfiguration von Scheibenpaketen, bei der drei Wellen 1, 2, 1' gegeneinander geneigt und die Scheiben tellerförmig sind.

Alle hier dargstellten Vorrichtungen gemäß der Erfindung können die folgenden Merkmale aufweisen;
* Die Drehzahlen der aus Wellen und Scheiben bestehenden Pakete können variabel sein, den Bedürfnissen des Produktes angepaßt. Sie liegen vorzugsweise im Drehzahlbereich zwischen 10 und 1000 U/min.
* Alle Pakete laufen in ein- und demselben Drehsinn um. Maßgeblich ist dabei die Differenzgeschwindigkeit, die zwei einander gegenüberliegende Flächenelemente zweier Scheiben im Überlappungsbereich aufweisen. Diese Differenzgeschwindigkeit kann im Bereich zwischen 1 und 20 m/s liegen. Am besten liegt sie zwischen 2,5 und 7 m/s.
* Die Scheiben können klassische Filterscheiben sein, aufgebaut aus einem porösen keramischen Material. Es kann sich aber auch um hohle Siebkörper handeln. Schließlich können wenigstens einzelne der Scheiben als sogenannte Dummy-Scheiben ausgebildet sein. Ebenso kommt ein Komposit-Aufbau in Betracht, zum Beispiel umfassend beliebige Träger- und Filtermaterialien,
* Es kann wenigstens eine der Wellen einen Anschluß für Waschflüssigkeit haben, um über das Wellenpaket dem Unfiltrat Waschflüssigkeit zuzuführen. Die Waschflüssigkeit kann aber auch auf andere Weise als über eine Welle und/oder das Paket zugeführt werden.
* Die Scheiben der einzelnen Scheibenpakete können aus unterschiedlichen Filtermedien aufgebaut sein, die bezüglich ihres Materiales oder ihrer Abscheideraten voneinander verschieden sind. Dies gilt sowohl innerhalb einer Kammer, als auch von einer Kammer zur anderen.
* Zur Verarbeitung großer Volumina sowie zur Realisierung einer kontinuierlichen Betriebsweise können mehrere Vorrichtungen parallel zueinander und/oder in Serie geschaltet werden.

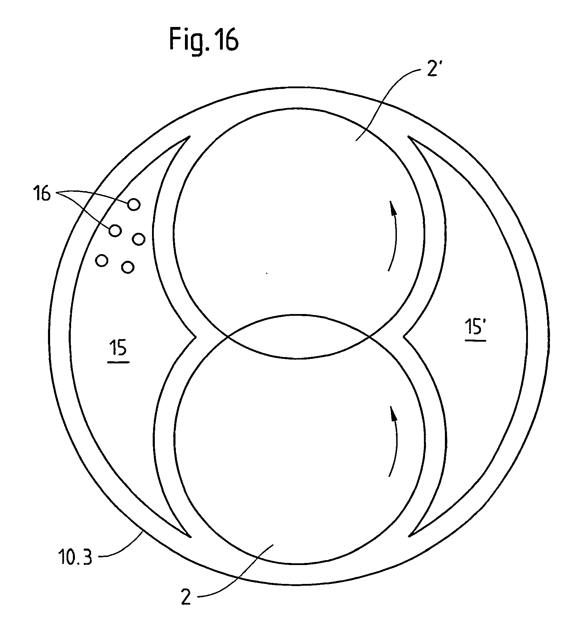

Figur 16 zeigt eine Vorrichtung in schematischer Darstellung in Draufsicht. Man erkennt dort den Mantel 10.3 eines Behälters. Der Mantel ist kreisrund. Demgemäß ist der Behälter zylindrisch. Der Behälter enthält zwei Scheibenpakete mit Scheiben 2, 2'. Die Scheiben sind wiederum gemäß der Erfindung einander überlappend angeordnet. Die Drehrichtungen sind durch die beiden Pfeile dargestellt.

Der Behältermantel 10.3 bildet mit den Außenumfängen der Scheibenpakete zwei Räume 15, 15', die entfernt einer Mondsichel ähnlich sehen. Diese beiden Räume 15, 15' lassen sich sehr gut ausnutzen zum Aufnehmen von Hilfsaggregaten, vor allem von Kühleinrichtungen, aber auch von Heizeinrichtungen. Siehe die schematisch angedeuteten Kühlrohre 16, die parallel zur Längsachse des Behältermantels 10.3 verlaufen.

Die Erfinder haben sich eine besonders interessante Art des Betreibens der Vorrichtung ausgedacht. Die Vorrichtung wird derart betrieben, daß die Scheibenpakete während einer gewissen Zeitspanne still stehen, sodann in Umlauf versetzt werden, sodann wieder still stehen, und so weiter. Damit wird folgendes erreicht:
Während der Stillstandsphasen erfolgt eine statische Filtration. Es baut sich ein Kuchen auf den Außenflächen der Scheiben auf. Während der Zeitspannen des Umlaufes wird der Kuchen wieder beseitigt.

Dieser Gedanke läßt sich nicht nur bei einer erfindungsgemäßen Gestaltung der Vorrichtung anwenden, sondern auch bei einem hiervon abweichenden Aufbau. Notwendig ist lediglich der Aufbau aus den genannten Scheibenpaketen, bei welchen die Scheiben des einen Paketes in die Zwischenräume zwischen einander benachbarten Scheiben des anderen Paketes eingreifen. Nicht notwendig, aber zu bevorzugen ist der gleichsinnige Umlauf der Scheiben.

## Patentansprüche

1. Vorrichtung zum Filtrieren von Flüssigkeiten;
mit wenigstens zwei parallel oder unter einem spitzen Winkel zueinander angeordneten Wellen (1); wobei
jede Welle (1) ein Paket von filtrierenden Scheiben (2) trägt, die senkrecht zur Wellenachse verlaufen und mit der Welle (1) drehfest verbunden sind;
Scheiben (2) des einen Scheibenpaketes in die Zwischenräume zwischen den Scheiben (2') eines benachbarten Scheibenpaketes eingreifen;
wenigstens eine der Wellen (1) antreibbar ist;
wenigstens eine der Wellen (1) hohl und mit Bohrungen (1.2) versehen ist;
wenigstens einige der Scheiben (2), die auf einer der Hohlwellen (1) sitzen, in ihrem Inneren Kanäle (2.4) aufweisen, die mit dem Innenraum ihrer Hohlwelle (1) in leitender Verbindung stehen;
zwischen jeweils zwei einander benachbarten Scheiben (2) einer Welle sich ein ringförmiges Distanzelement (3) befindet;
umfassend einen Tragring (3.1) sowie zwei Dichtringe (3.2);
jeder Dichtring (3.2) zwischen dem Tragring (3.1) und einer an das Distanzelement (3) angrenzenden Scheibe (2) angeordnet ist, so dass das Distanzelement (3) gegen die angrenzende Scheibe (2) abgedichtet ist;
der Tragring (3.1) aus einem relativ harten, unnachgiebigen Material bestehet;
der Tragring (3.1) weist gegenüber der Welle (1) Übermaß auf, so dass zwischen der Innenfläche des Tragringes (3.1) und der Außenfläche der Welle (1) ein Kanal (4) gebildet ist, der sich wenigstens über einen Teil der Länge der Welle (1) erstreckt, **dadurch gekennzeichnet, dass** Welle (1) und/oder Tragring (3.1) Vorsprünge (3.1.1, 3.1.2, 3.1.3) aufweisen, die eine Zentrierung des Tragrings (3.1) relativ zur Welle (1) herbeiführen; Welle (1) und/oder Tragring (3.1) Nuten (1.1) aufweisen, die zum Herstellen einer drehfesten Verbindung zwischen Welle (1) und Tragring (3.1) dienen.

2. Vorrichtung nach Anspruch 1, **dadurch gekennzeichnet, dass** die Dichtringe (3.2) aus plastisch bzw. elastisch verformbaren Werkstoffen wie Elastomeren, leicht verformbaren Metallen oder deren Legierungen, oder Graphit bestehen.

3. Vorrichtung nach Anspruch 2, **dadurch gekennzeichnet, dass** die Dichtringe (3.2) durch Aufvulkanisieren am Tragring (3.1) fixiert sind.

4. Vorrichtung nach Anspruch 2 oder 3, **dadurch gekennzeichnet, dass** die Dichtringe (3.2) einen Sitz zur Aufnahme der angrenzenden Scheibe (2) aufweisen.

5. Vorrichtung nach einem der Ansprüche 1 bis 4, **gekennzeichnet durch** die folgenden Merkmale:
die beiden Dichtringe (3.2) eines Tragringes (3.1) sind jeweils auf eine Stirnfläche des Tragringes (3.1) aufgebracht;
die beiden Dichtringe (3.2) sind **durch** einen mit ihnen einteiligen Steg (3.3) miteinander verbunden;
Dichtringe (3.2) und Steg (3.3) eines Distanzelementes (3) bilden gemeinsam ein Doppel-T- oder ein U-Profil.

6. Vorrichtung nach einem der Ansprüche 1 bis 5, **gekennzeichnet durch** eine solche Materialwahl für die Welle (1), die Scheiben (2), den Tragring (3.1) und die Dichtringe (3.2), dass die Welle (1) einerseits bei Wärmeeinwirkung dasselbe Längenwachstum aufweist, wie die Scheiben (2), die Tragringe (3.1) und die Dichtringe (3.2) in ihrer Gesamtheit andererseits.

7. Vorrichtung nach einem der Ansprüche 1 bis 6, **gekennzeichnet durch** die folgenden Merkmale:
die aus Wellen (1, 1') und Scheiben (2, 2') zusammengesetzten Baugruppen befinden sich in einem flüssigkeitsdichten Behälter (10, 10');
der Behälter (10, 10') weist einen die Baugruppen umschließenden Mantel (10.3, 10.3') sowie einen Deckel (10.5, 10.5') auf;
die Wellen (1, 1') sind jeweils an einem Ende im Behälter (10, 10') fliegend **gelagert und gegen diesen (10, 10') abgedichtet.**

8. Vorrichtung nach Anspruch 7, **gekennzeichnet durch** die folgenden Merkmale:
es sind zwei Einzelbehälter vorgesehen, die jeweils eine Baugruppe enthalten und die zu einem Gesamtbehälter zusammengefügt sind;
die Mäntel (10.3, 10.3') der beiden Einzelbehälter sind fluchtend zueinander zusammengefügt, derart, dass die Deckel (10.5, 10.5') der beiden Einzelbehälter (10, 10') voneinander abgewandt sind.
die freien Enden der Wellen (1, 1') sind einander zugewandt.

9. Vorrichtung nach Anspruch 7, **gekennzeichnet durch** die folgenden Merkmale:
es sind zwei Einzelbehälter vorgesehen, die jeweils eine Baugruppe enthalten, und die zu einem Gesamtbehälter zusammengefügt sind;
die Mäntel der beiden Einzelvorrichtungen sind fluchtend zusammengefügt und weisen an der Vereinigungsstelle eine Trennwand auf;
die Wellen (1, 1') der beiden Einzelbehälter sind nur in einem mittleren Bereich der Trennwand gelagert, und die dichtungsfreien Enden der Wellen 1, 1' sind voneinander abgewandt.

10. Vorrichtung nach Anspruch 9, **dadurch gekennzeichnet, dass** die beiden Einzelbehälter (10, 10') einen einzigen, ungeteilten Raum umschließen.

11. Vorrichtung nach Anspruch 9 oder 10, **dadurch gekennzeichnet, dass** die Trennwand (10.8) Durchlässe zum Herstellen einer leitenden Verbindung zwischen den beiden von den Einzelbehältern (10, 10') umschlossenen Räumen aufweist.

12. Vorrichtung nach einem der Ansprüche 7 bis 11, **dadurch gekennzeichnet, dass** dem Behälter (10) bzw. den Einzelbehältern (10, 10') eine Schwenkeinrichtung zu deren Verschwenken aus der Vertikalen in die horizontale Position zugeordnet ist.

13. Vorrichtung nach einem der Ansprüche 8 bis 12, **dadurch gekennzeichnet, dass** die Einzelbehälter (10, 10') einen einzigen, gemeinsamen Mantel aufweisen.

14. Vorrichtung nach einem der Ansprüche 7 bis 13, **dadurch gekennzeichnet, dass** die Mäntel der Behälter zylindrisch sind.

15. Vorrichtung nach einem der Ansprüche 7 bis 13, **dadurch gekennzeichnet, dass** die Mäntel der Behälter von der zylindrischen Form abweichen.

16. Vorrichtung nach Anspruch 15, **dadurch gekennzeichnet, dass** die Mäntel der Behälter kegelstumpfförmig sind.

17. Vorrichtung nach Anspruch 15, **dadurch gekennzeichnet, dass** die Mäntel der Behälter in einem achssenkrechten Querschnitt gesehen korbbogenförmig sind.

18. Vorrichtung nach einem der Ansprüche 7 bis 17, **dadurch gekennzeichnet, dass** die Kontur der Mäntel der Kontur der Scheibenpakete angepasst ist.

19. Vorrichtung nach einem der Ansprüche 7 bis 18, **dadurch gekennzeichnet, dass** die Scheiben eines Paketes im Durchmesser derart bemessen sind, dass die Hülllinie des Paketes eine von der Kreiszylinderform abweichende Form hat.

20. Vorrichtung nach Anspruch 19, **dadurch gekennzeichnet, dass** die Hülllinie eines Scheibenpaketes kegelartig ist.

21. Vorrichtung nach einem der Ansprüche 7 bis 20, **dadurch gekennzeichnet, dass** die Wellen der Pakete zueinander geneigt sind.

22. Vorrichtung nach Anspruch 21, **dadurch gekennzeichnet, dass** die Scheiben von der ebenen Form abweichen und zum Beispiel sphärisch oder tellerartig sind.

23. Vorrichtung nach einem der Ansprüche 1 bis 22, **gekennzeichnet durch** die folgenden Merkmale:
der Behälter (10, 10') hat die Form eines Kreiszylinders;
der Raum, der sich zwischen der Innenfläche des Mantels (10.3, 10.3') des Behälters (10,10') und den Außenumfängen einander benachbarter Scheibenpakete befindet, enthält Einbauten wie z. B. einen Wärmetauscher, z. B. zum Temperieren des zu verarbeitenden Produktes.

24. Verfahren zum Betreiben einer Vorrichtung gemäß einem der Ansprüche 1 bis 23, wobei
der Unfiltrat-seitige Druck im Bereich zwischen 0,2 und 50 bar, vorzugsweise zwischen 0,5 und 10 bar liegt;
der Abzug von behandeltem Medium aus den einzelnen Hohlwellen separat regelbar ist;
der Druck auf der Austrittsseite der Hohlwelle auf Werte im Bereich von -0,999 bar (Vakuum) bis 49,99 bar geregelt wird,

25. Verfahren zum Betreiben einer Vorrichtung zum Filtrieren von Flüssigkeit mit wenigstens zwei parallel oder unter einem spitzen Winkel zueinander angeordneten Wellen, deren jede ein Paket von Scheiben trägt, die senkrecht zur Wellenachse verlaufen und mit der Welle drehfest verbunden sind, derart, dass die Scheiben des einen Scheibenpaketes in die Zwischenräume der Scheiben eines benachbarten Scheibenpaketes eingreifen, nach einem der Ansprüche 1 bis 23, wobei
die Wellen (1) in ein- und demselben Drehsinn angetrieben werden;
die Wellen (1) intermittierend angetrieben werden, so dass auf eine Zeitspanne des Antriebs eine Zeitspanne des Stillstands folgt.

26. Verfahren nach Anspruch 25, **dadurch gekennzeichnet, dass** die Zeitspannen des Stillstandes ein Mehrfaches der Zeitspanne des Antriebes betragen.

27. Verfahren nach Anspruch 25 oder 26, **dadurch gekennzeichnet, dass** die Relativgeschwindigkeiten einander gegenüberliegender Flächenelemente zweier einander benachbarter Scheiben in radialer Richtung gesehen konstant ist.

## Claims

1. Device for filtering liquids, comprising at least two shafts (1) arranged parallel to one another or at an acute angle to one another, wherein each shaft (1) carries a stack of filtering discs (2) which extend perpendicularly to the axis of the shaft and are rotationally engaged with the shaft (1), discs (2) of one stack of discs engage with the intermediate spaces between the gaps (2') of an adjacent stack of discs, at least one of the shafts (1) is driveable, at least one of the shafts (1) is hollow and provided with bores (1.2), at least some of the discs (2), which are located on one of the hollow shafts (1), have in their interior channels (2.4) which are conductively connected to the interior of their hollow shaft (1), an annular spacer (3), comprising a support ring (3.1) and two sealing rings (3.2), being located between each pair of adjacent discs (2) of a shaft, each sealing ring (3.2) being arranged between the support ring (3.1) and a disc (2) adjacent to the spacer (3), so the spacer (3) is sealed with respect to the adjacent disc (2), the support ring (3.1) consists of a relatively hard inflexible material, and the support ring (3,1) is oversized with respect to the shaft (1), so a channel (4), extending at least over a portion of the length of the shaft (1), is formed between the inner surface of the support ring (3.1) and the outer surface of the shaft (1), **characterised in that** the shaft (1) and/or support ring (3.1) comprise projections (3.1.1, 3.1.2, 3.1.3) causing centring of the support ring (3.1) relative to the shaft (1), and the shaft (1) and/or support ring (3.1) comprise grooves (1,1) used for producing rotational engagement between the shaft (1) and support ring (3.1),

2. Device according to claim 1, **characterised in that** the sealing rings (3.2) consist of plastically or elastically deformable materials such as elastomers, highly deformable metals or alloys thereof, or graphite.

3. Device according to claim 2, **characterised in that** the sealing rings (3.2) are fixed to the support ring (3.1) by vulcanisation.

4. Device according to either claim 2 or claim 3, **characterised in that** the sealing rings (3.2) have a seat for receiving the adjacent disc (2).

5. Device according to any one of claims 1 to 4, **characterised by** the following features: the two sealing rings (3.2) of a support ring (3.1) are each attached to an end face of the support ring (3.1), the two sealing rings (3.2) are interconnected by a web (3.3) integral therewith, and the sealing rings (3.2) and web (3.3) of a spacer (3) jointly form a double T-shaped or U-shaped profile.

6. Device according to any one of claims 1 to 5, **characterised by** a selection of the material for the shaft (1), the discs (2), the support ring (3.1) and the sealing rings (3.2) such that the shaft (1), on the one hand, has the same growth in length under the effect of heat as the discs (2), the support rings (3.1) and the sealing rings (3.2) combined, on the other hand.

7. Device according to any one of claims 1 to 6, **characterised by** the following features: the modules composed of shafts (1, 1') and discs (2, 2') are located in a liquid-tight container (10, 10'), the container (10, 10') has a casing (10.3, 10.3'), enclosing the modules, and a lid (10.5, 10.5'), and in that the shafts (1, 1') are each cantilevered at one end in the container (10, 10') and are sealed with respect to the container (10, 10').

8. Device according to claim 7, **characterised by** the following features: there are provided two individual containers, which each contain a module and are joined to form an overall container, the casings (10.3, 10.3') of the two individual containers are joined flush with one another in such a way that the lids (10.5, 10.5') of the two individual containers (10, 10') are remote from one another, and the free ends of the shafts (1, 1') face one another.

9. Device according to claim 7, **characterised by** the following features: there are provided two individual containers, which each contain a module and are joined to form an overall container, the casings of the two individual devices are joined flush with one another and have a partition at the joint, the shafts (1, 1') of the two individual containers are mounted only in a central region of the partition, and the seal-free ends of the shafts (1, 1') are remote from one another.

10. Device according to claim 9, **characterised in that** the two individual containers (10, 10') enclose a single undivided chamber.

11. Device according to either claim 9 or claim 10, **characterised in that** the partition (10.8) comprises apertures for producing a conductive connection between the two chambers enclosed by the individual containers (10, 10').

12. Device according to any one of claims 7 to 11, **characterised in that** associated with the container (10) or the individual containers (10.10') is a swivelling device for swivelling the containers from the vertical into the horizontal position.

13. Device according to any one of claims 8 to 12, **characterised in that** the individual containers (10. 10') have a single common casing.

14. Device according to any one of claims 7 to 13, **characterised in that** the casings of the containers are cylindrical.

15. Device according to any one of claims 7 to 13, **characterised in that** the casings of the containers are non-cylindrical.

16. Device according to claim 15, **characterised in that** the casings of the containers are truncated cone-shaped.

17. Device according to claim 15, **characterised in that** the casings of the containers are three-centred arch-shaped, viewed in cross-section perpendicular to the axis.

18. Device according to any one of claims 7 to 17, **characterised in that** the contour of the casings is adapted to the contour of the stack of discs.

19. Device according to any one of claims 7 to 18, **characterised in that** the diameter of the discs of a stack is such that the envelope of the stack is non-circular cylindrical.

20. Device according to claim 19, **characterised in that** the envelope of a stack of discs is conical.

21. Device according to any one of claims 7 to 20, **characterised in that** the shafts of the stacks are inclined toward one another.

22. Device according to claim 21, **characterised in that** the discs are non-planar and are, for example, spherical or plate-like.

23. Device according to any one of claims 1 to 22, **characterised by** the following features: the container (10, 10') is circular cylindrical, the chamber, located between the inner surface of the casing (10.3, 10.3') of the container (10, 10') and the outer circumferences of adjacent stacks of discs, contains fixtures such as, for example, a heat exchanger, for example for tempering the product to be processed.

24. Method for operating a device according to any one of claims 1 to 23, wherein the non-filtrate-side pressure is in the range of between 0.2 and 50 bar, preferably between 0.5 and 10 bar, the removal of treated medium from the individual hollow shafts is separately adjustable, and the pressure on the outlet side of the hollow shaft is adjusted to values in the range of from -0.999 bar (vacuum) to 49.99 bar.

25. Method for operating a device for filtering liquid, comprising at least two shafts, which are arranged parallel to one another or at an acute angle to one another and each of which carries a stack of discs which extend perpendicularly to the axis of the shaft and are rotationally engaged with the shaft in such a way that the discs of one stack of discs engage with the intermediate spaces of the discs of an adjacent stack of discs, according to any one of claims 1 to 23, wherein the shafts (1) are driven in the same direction of rotation, and the shafts (1) are driven intermittently, so a drive period is followed by a stop period.

26. Method according to claim 25, **characterised in that** the stop periods are a multiple of the drive period.

27. Method according to either claim 25 or claim 26, **characterised in that** the relative speeds of opposing surface elements of two adjacent discs, viewed in the radial direction, are constant.

## Revendications

1. Dispositif pour filtrer des liquides, comportant au moins deux arbres (1) disposés parallèlement ou formant un angle aigu entre eux, dans lequel :
chaque arbre (1) porte un paquet de disques filtrants (2) qui s'étendent perpendiculairement à l'axe de l'arbre et sont reliés à l'arbre (1) de manière non rotative,
des disques (2) d'un paquet de disques s'engagent dans les espaces intermédiaires entre les disques (2') d'un paquet de disques voisin,
au moins un des arbres (1) peut être entraîné, au moins un des arbres (1) est creux et est muni d'orifices (1,2),
au moins quelques-uns des disques (2) qui sont placés sur l'un des arbres creux (1) présentent dans leur intérieur des canaux (2.4) qui sont en liaison conductrice avec l'espace intérieur de leur arbre creux (1),
entre deux disques (2) voisins l'un de l'autre d'un arbre se trouve un élément d'écartement (3) annulaire comprenant un anneau porteur (3.1) ainsi que deux bagues d'étanchéité (3.2),
chaque bague d'étanchéité (3.2) est disposée entre l'anneau porteur (3.1) et un disque (2) adjacent à l'élément d'écartement (3) de telle sorte que l'élément d'écartement (3) est rendu étanche par rapport au disque adjacent (2),
l'anneau porteur (3.1) est réalisé dans un matériau relativement dur, non élastique,
l'anneau porteur (3.1) présente par rapport à l'arbre (1) un surdimensionnement de telle sorte qu'entre la surface intérieure de l'anneau porteur (3,1) et la surface extérieure de l'arbre (1) un canal (4) est formé, lequel s'étend au moins sur une partie de la longueur de l'arbre (1),
**caractérisé en ce que**
l'arbre (1) et/ou l'anneau porteur (3.1) présentent des saillies (3.1,1, 3.1.2, 3.1.3) qui entraînent un centrage de l'anneau porteur (3.1) par rapport à l'arbre (1),
l'arbre (1) et/ou l'anneau porteur (3.1) présentent des encoches (1.1) qui servent à établir une liaison résistant à la rotation entre l'arbre (1) et l'anneau porteur (3.1).

2. Dispositif selon la revendication 1, **caractérisé en ce que** les bagues d'étanchéité (3.2) sont réalisées dans des matériaux déformables plastiquement ou élastiquement, tels que des élastomères, des métaux facilement déformables ou leurs alliages ou en graphite.

3. Dispositif selon la revendication 2, **caractérisé en ce que** les bagues d'étanchéité (3.2) sont fixées par vulcanisation sur l'anneau porteur (3.1).

4. Dispositif selon la revendication 2 ou 3, **caractérisé en ce que** les bagues d'étanchéité (3.2) présentent un siège pour recevoir le disque adjacent (2).

5. Dispositif selon l'une des revendications 1 à 4, **caractérisé par** les caractéristiques suivantes :
les deux bagues d'étanchéité (3.2) d'un anneau porteur (3.1) sont disposées chacune sur une face frontale de l'anneau porteur (3.1),
les deux bagues d'étanchéité (3.2) sont reliées entre elles par une entretoise (3.3) d'un seul tenant avec elles,
les bagues d'étanchéité (3.2) et l'entretoise (3.3) d'un élément d'écartement (3) forment en commun un profil en double T ou un profil en U.

6. Dispositif selon l'une des revendications 1 à 5, **caractérisé en ce que** les matériaux pour l'arbre (1), les disques (2), l'anneau porteur (3.1) et les bagues d'étanchéité (3.2) sont choisis de telle sorte que l'arbre (1), d'une part, présente sous l'effet de chaleur la même augmentation de longueur que les disques (2), les anneaux porteurs (3.1) et les bagues d'étanchéité (3.2) dans leur totalité, d'autre part.

7. Dispositif selon l'une des revendications 1 à 6, **caractérisé par** les caractéristiques suivantes :
les ensembles composés d'arbres (1, 1') et de disques (2, 2') se trouvent dans un récipient étanche aux liquides (10, 10'),
le récipient (10, 10') présente une enveloppe (10.3, 10.3') enferment les ensembles, ainsi qu'un couvercle (10.5, 10.5'),
les arbres (1, 1') sont chacun montés en porte-à-faux à une extrémité dans le récipient (10, 10') et rendus étanches par rapport à celui-ci (10, 10').

8. Dispositif selon la revendication 7, **caractérisé par** les caractéristiques suivantes :
deux récipients individuels sont prévus, lesquels contiennent chacun un ensemble et sont assemblés pour former un récipient commun,
les enveloppes (10.3, 10.3') des deux récipients individuels sont assemblées en étant alignés l'une avec l'autre de telle sorte que les couvercles (10.5, 10,5') des deux récipients individuels (10, 10') sont dirigés l'un à l'opposé de l'autre,
les extrémités libres des arbres (1, 1') sont tournées l'une vers l'autre.

9. Dispositif selon la revendication 7, **caractérisé par** les caractéristiques suivantes :
deux récipients individuels sont prévus, lesquels contiennent chacun un ensemble et qui sont assemblés pour former un récipient commun,
les enveloppes des deux dispositifs individuels sont assemblées en étant alignées et présentent une paroi de séparation au point de jonction,
les arbres (1, 1') des deux récipients individuels sont montés seulement dans une zone centrale de la paroi de séparation et les extrémités sans joint des arbres (1, 1') sont dirigées l'une à l'opposé de l'autre.

10. Dispositif selon la revendication 9, **caractérisé en ce que** les deux récipients individuels (10, 10') enferment un seul espace non divisé.

11. Dispositif selon la revendication 9 ou 10, **caractérisé en ce que** la paroi de séparation (10,8) présente des passages pour établir une liaison conductrice entre les deux espaces entourés par les récipients individuels (10, 10').

12. Dispositif selon l'une des revendications 7 à 11, **caractérisé en ce qu'**un dispositif de pivotement est associé au récipient (10) ou aux récipients individuels (10, 10') pour leur pivotement de la verticale à la position horizontale.

13. Dispositif selon l'une des revendications 8 à 12, **caractérisé en ce que** les récipients individuels (10, 10') présentent une enveloppe unique commune.

14. Dispositif selon l'une des revendications 7 à 13, **caractérisé en ce que** les enveloppes des récipients sont cylindriques.

15. Dispositif selon l'une des revendications 7 à 13, **caractérisé en ce que** les enveloppes des récipients diffèrent de la forme cylindrique.

16. Dispositif selon la revendication 15, **caractérisé en ce que** les enveloppes des récipients sont en forme de tronc de cône.

17. Dispositif selon la revendication 15, **caractérisé en ce que** les enveloppes des récipients sont en forme d'arc en anse de panier quand on regarde dans une vue en coupe transversale perpendiculaire à l'axe.

18. Dispositif selon l'une des revendications 7 à 17, **caractérisé en ce que** le contour des enveloppes est adapté au contour des paquets de disques.

19. Dispositif selon l'une des revendications 7 à 18, **caractérisé en ce que** les disques d'un paquet sont dimensionnés dans leur diamètre de telle sorte que l'enveloppante du paquet a une forme qui s'écarte de la forme cylindrique circulaire.

20. Dispositif selon la revendication 19, **caractérisé en ce que** l'enveloppante d'un paquet de disques est en forme de cône.

21. Dispositif selon l'une des revendications 7 à 20, **caractérisé en ce que** les arbres des paquets sont inclinés l'un vers l'autre.

22. Dispositif selon la revendication 21, **caractérisé en ce que** les disques diffèrent de la forme plane et sont, par exemple, en forme de sphère ou d'assiette.

23. Dispositif selon l'une des revendications 1 à 22, **caractérisé par** les caractéristiques suivantes :
le récipient (10, 10') à la forme d'un cylindre circulaire,
l'espace qui se trouve entre la surface intérieure de l'enveloppe (10.3,10.3') du récipient (10, 10') et les périphéries extérieures de paquets de disques voisins les uns des autres contient des éléments incorporés, tels qu'un échangeur de chaleur, afin de tempérer le produit à traiter, par exemple.

24. Procédé pour faire fonctionner un dispositif selon l'une des revendications 1 à 23, dans lequel :
la pression du côté du produit non filtré est située dans la plage comprise entre 0,2 et 50 bars, de préférence entre 0,5 et 10 bars,
l'évacuation de fluide traité des différents arbres creux est réglable séparément,
la pression du côté sortie de l'arbre creux est réglée à des valeurs comprises dans la plage allant de -0,999 bar (vide) à 49,99 bars.

25. Procédé pour faire fonctionner un dispositif de filtrage de liquides, comportant au moins deux arbres disposés parallèlement ou formant un angle aigu entre eux, dont chacun porte un paquet de disques qui s'étendent perpendiculairement à l'axe de l'arbre et sont reliés à l'arbre de manière non rotative de telle sorte que les disques d'un paquet de disques s'engagent dans les espaces intermédiaires des disques d'un paquet de disques voisin selon l'une des revendications 1 à 23, dans lequel :
les arbres (1) sont entraînés dans un seul et même sens de rotation,
les arbres (1) sont entraînés de manière intermittente de telle sorte qu'à une période d'entraînement succède une période d'arrêt.

26. Procédé selon la revendication 25, **caractérisé en ce que** les périodes d'arrêt sont égales à un multiple de la période d'entraînement.

27. Procédé selon la revendication 25 ou 26, **caractérisé en ce que** les vitesses relatives d'éléments plans opposés de deux disques voisins entre eux, quand on regarde dans la direction radiale, sont constantes.
